# FASCICULE DE BREVET EUROPEEN

(11) **EP 0 630 764 B1**
(45) Date de publication et mention de la délivrance du brevet: **21.05.1997**
(21) Numéro de dépôt: 94400655.0
(22) Date de dépôt: 28.03.1994
(51) Int. Cl.: B44D 3/08, F16D 1/08

(54) **Accouplement réglable pour agitateurs de peinture**
Einstellbare Kupplung für Lackrührer
Adjustable coupling for paint stirrers

(30) Priorité: 07.04.1993 FR 9304120
(43) Date de publication de la demande: 28.12.1994
(73) Titulaire: Société Anonyme dite: F.A.S., F-45650 Saint Jean le Blanc (FR)
(72) Inventeur: Krzywdziak, Alain, F-45100 Orleans (FR)
(74) Mandataire: Jolly, Jean-Pierre

(56) Documents cités:
- DE-B- 1 206 661
- FR-A- 2 258 277
- FR-A- 2 324 928
- GB-A- 1 148 656
- US-A- 2 965 363

## Description

L'invention concerne la liaison d'entraînement entre le système d'entraînement et les dispositifs agitateurs de peinture sur les machines d'agitation de peinture. Elle concerne en particulier un dispositif d'accouplement réglable de l'entraîneur et de la tige d'axe agitateur sur les machines d'agitation de peinture.

On sait (voir US-A-2965363) que la mise en place des divers couvercles agitateurs sur les machines d'agitation à pots suspendus nécessite de compenser la distance entre l'étagère support des couvercles agitateurs et la palette d'entraînement supérieure de chacun des entraîneurs, laquelle varie suivant les pots et les couvercles. Elle nécessite un réglage d'adaptation de l'accouplement effectué par l'utilisateur, et obtenu actuellement de façon simple par une vis de pression sur l'entraîneur et serrée à façon sur la tige de l'axe agitateur.

L'invention permet un tel réglage, mais sans outil. Il est en effet proposé selon l'invention un dispositif d'accouplement réglable de l'entraîneur et de la tige de l'axe agitateur, destiné à chacun des dispositifs agitateurs sur les machines d'agitation de peinture, caractérisé en ce qu'il fait intervenir un entraîneur dont la partie d'accouplement à la tige d'axe d'agitateur est en forme de manchon recevant dans son alésage et à faible jeu ladite tige d'axe agitateur, ledit manchon étant muni d'au moins une lumière longitudinale formée sur sa paroi et d'encoches latérales externes espacées longitudinalement, la tige d'agitateur reçue dans le manchon comportant à son extrémité supérieure au moins un trou de perçage transversal, et un élément en forme de clip comportant deux pattes élastiques reliées à une partie de base et orientées l'une vers l'autre pour entourer élastiquement ledit manchon de l'entraîneur, chacune desdites pattes comportant en outre une saillie interne complémentaire respectivement de chacune desdites encoches, la partie de base étant pourvue d'un élément de pion ou axe s'étendant vers l'ouverture de l'élément de clip et apte à s'engager dans ledit trou de perçage de l'axe agitateur, ledit élément de clip étant apte à être engagé sur le manchon du côté de la lumière par une simple poussée manuelle de manière à verrouiller la liaison entre l'entraîneur et la tige d'axe, ledit élément de pion s'engageant dans la lumière et le trou de la tige d'agitateur, tandis que simultanément les pattes du clip viennent pincer le corps du manchon à une hauteur appropriée d'accouplement et leurs saillies s'engagent dans les encoches du manchon, et à être dégagé par traction inverse pour libérer la liaison d'accouplement.

Ainsi, grâce à cette disposition, il n'est plus nécessaire d'utiliser un outil intermédiaire au risque que la liaison de serrage par vis classique soit mal assurée et par conséquent défectueuse dans le temps. L'accouplement selon l'invention s'obtient par une action manuelle sur le clip de poussée (pour l'engager) et de traction (pour le dégager) à la hauteur souhaitée, correspondant à l'engagement des pattes du clip sur les diverses encoches espacées en altitude du manchon de manière à obtenir pour chaque dispositif agitateur une jonction adéquate de l'accouplement du manchon de l'entraîneur et de la tige d'axe agitateur.

L'invention est expliquée plus en détail ci-après à l'aide d'un exemple de réalisation et en référence aux dessins annexés sur lesquels :
La figure 1 est une vue en coupe longitudinale partielle d'un dispositif d'accouplement selon l'invention entre un entraîneur d'une machine d'agitation de peinture et l'axe agitateur du pot de peinture traité,
La figure 2 est une vue en élévation de l'entraîneur correspondant,
La figure 3 est une vue de l'entraîneur selon la figure 2, tourné à 90° ,
La figure 4 est une vue de dessus du clip de verrouillage,
La figure 5 est une vue en coupe transversale du clip, et
Les figures 6 et 7 montrent deux positions extrêmes respectivement haute et basse de l'accouplement réalisé.

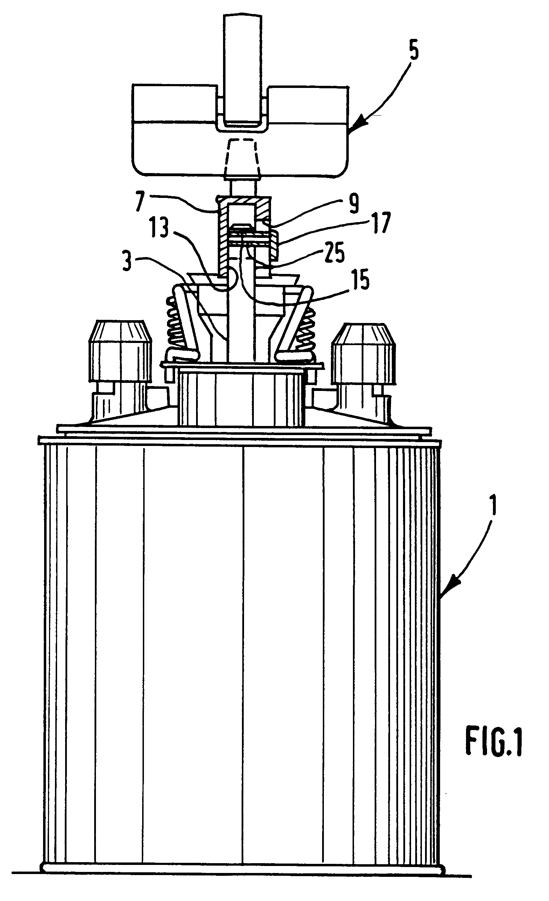

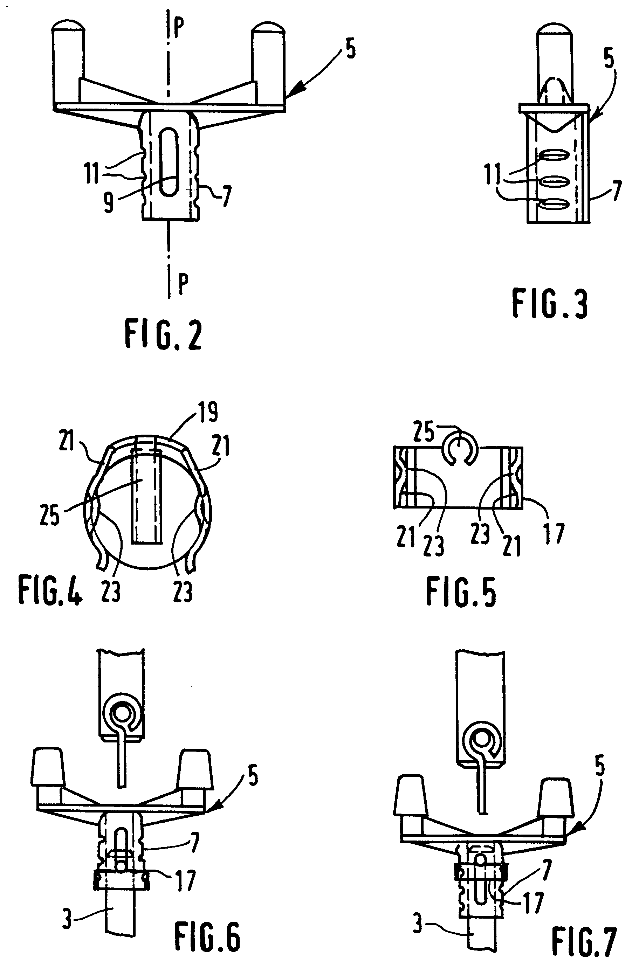

La figure 1 représente un pot de peinture 1 monté sur une machine d'agitation (non représentée). La peinture contenue dans le pot est agitée au moyen d'un axe agitateur classique 3 entraîné en rotation. L'axe agitateur représenté par sa tige au niveau supérieur est entraîné au moyen d'un entraîneur à palette 5 accouplé à la partie supérieure de la tige d'agitateur 3. L'entraîneur (figures 2 et 3) comprend un corps cylindrique inférieur en forme de manchon 7 pourvu d'une lumière longitudinale 9 et d'encoches latérales externes 11. Ces encoches sont espacées d'un intervalle régulier sur la longueur du manchon. Elles sont au nombre de six, formées parallèlement au plan médian P passant par la lumière 9 en trois séries de deux diamétralement opposées l'une à l'autre. L'entraîneur reçoit dans l'alésage 13 du manchon la tige d'agitateur 3, laquelle coulisse à faible jeu à l'intérieur du manchon. La tige comporte un trou de perçage transversal 15 formé à faible distance de son extrémité supérieure.

La tige d'agitateur est verrouillée en position sur l'entraîneur au moyen d'un clip 17 engagé sur le corps en manchon de l'entraîneur.

Le clip (figures 4 et 5) comporte une partie de base 19 à laquelle sont reliées deux pattes élastiques courbées 21, symétriques l'une de l'autre par rapport au plan médian de la partie de base. Ces pattes orientées l'une vers l'autre ménagent une ouverture à leur extrémité avant, laquelle est de dimension légèrement inférieure au diamètre du manchon. Cette ouverture permet l'engagement du clip sur le manchon de l'entraîneur, tandis qu'il est pincé par les pattes. Elles sont en outre munies chacune d'un bossage ou saillie interne 23 complémentaire des encoches 11. La partie de base 19 est pourvue d'un pion cylindrique 25 s'étendant vers l'ouverture du clip dans son plan médian et parallèlement aux pattes. Ce pion, complémentaire du trou de perçage 15 de la tige d'agitateur est reçu par ce dernier, lors de l'engagement du clip sur le manchon de l'entraîneur.

Le fonctionnement du dispositif d'accouplement selon l'invention est très simple. En effet, ayant disposé l'entraîneur à une hauteur adéquate pour une bonne jonction d'entraînement de la palette supérieure de l'entraîneur relativement à la tige d'agitateur, on engage par simple poussée manuelle le clip sur le manchon du côté de la lumière, de manière à ce que les bossages des pattes viennent sur deux encoches opposées, les plus proches de la hauteur désirée, le pion d'axe du clip venant à travers la lumière puis dans le trou transversal de la tige. Lorsque l'engagement est effectué, on obtient un verrouillage parfait de la liaison d'accouplement. La liaison en rotation est obtenue par le pion d'axe du clip en appui sur la lumière et la position en altitude est obtenue par l'engagement en pincement des bossages des pattes du clip sur les encoches du manchon. Le clip est maintenu en position par l'effet de pincement des pattes autour du manchon de l'entraîneur. Il ne peut s'échapper et la liaison demeure parfaitement assurée dans le temps contrairement à l'accouplement classique d'une vis de serrage, amenée à perdre appui avec le temps et à se desserrer.

Pour libérer la liaison et adapter, par exemple, un autre pot, il suffit de tirer de façon inverse à la poussée précitée le clip. Le manchon peut alors être ajusté à une nouvelle hauteur d'accouplement entre les positions limites haute (figure 6) et basse (figure 7).

Naturellement, des variantes de réalisation peuvent être apportées. Le manchon de l'entraîneur peut présenter d'autres lumières de passage du pion d'axe par exemple décalées angulairement de 90° avec des systèmes d'encoches réparties en hauteur pour multiplier les positions d'altitude possibles de l'accouplement. Les systèmes d'encoches et saillies verrouillant l'altitude de l'accouplement peuvent être conformés de façon variable. Eventuellement la tige d'agitateur peut comporter plusieurs trous de perçage décalés en hauteur de façon à ajouter encore aux nombres de possibilités d'accouplement.

Ce qui précède montre bien les avantages du dispositif d'accouplement selon l'invention quant à la facilité d'ajustement de l'accouplement d'entraînement des agitateurs sur les machines d'agitation de peinture sujettes à des changements permanents de pots à traiter.

## Revendications

1. Dispositif d'accouplement réglable de l'entraîneur (5) et de la tige (3) de l'axe agitateur, destiné à chacun des dispositifs agitateurs sur les machines d'agitation de peinture, caractérisé en ce qu'il fait intervenir un entraîneur (5) dont la partie d'accouplement à la tige d'axe d'agitateur (3) est en forme de manchon (7) recevant dans son alésage et à faible jeu ladite tige d'axe agitateur, ledit manchon étant muni d'au moins une lumière longitudinale (9) formée sur sa paroi et d'encoches latérales externes (11) espacées longitudinalement, la tige d'agitateur (3) reçue dans le manchon (7) comportant à son extrémité supérieure au moins un trou de perçage transversal (15), et un élément en forme de clip (17) comportant deux pattes élastiques (21) reliées à une partie de base (19) et orientées l'une vers l'autre pour entourer élastiquement ledit manchon de l'entraîneur, chacune desdites pattes comportant en outre une saillie interne (23) complémentaire respectivement de chacune desdites encoches (11), la partie de base (19) étant pourvue d'un élément de pion ou axe (25) s'étendant vers l'ouverture de l'élément de clip et apte à s'engager dans ledit trou de perçage de l'axe agitateur, ledit élément de clip étant apte à être engagé sur le manchon du côté de la lumière (9) par une simple poussée manuelle de manière à verrouiller la liaison entre l'entraîneur et la tige d'axe, ledit élément de pion (25) s'engageant dans la lumière et le trou de la tige d'agitateur, tandis que simultanément les pattes du clip viennent pincer le corps du manchon à une hauteur appropriée d'accouplement et leurs saillies s'engagent dans les encoches du manchon, et à être dégagé par traction inverse pour libérer la liaison d'accouplement.

2. Dispositif d'accouplement selon la revendication 1, caractérisé en ce que l'entraîneur (5) comporte plusieurs séries d'encoches (11) opposées deux à deux sur le corps du manchon.

3. Dispositif d'accouplement selon l'une des revendications 1,2, caractérisé en ce que l'élément de clip (17) présente une symétrie par rapport à une plan médian de la partie de base (19).

4. Dispositif d'accouplement selon l'une des revendications précédentes, caractérisé en ce que lesdites encoches opposées (11) sont disposées parallèlement au plan médian (P) de l'entraîneur, dans une zone de pincement des pattes du clip sur le corps de l'entraîneur.

5. Dispositif d'accouplement selon l'une des revendications précédentes, caractérisé en ce que les encoches (11) ont une conformation variable.

6. Dispositif d'accouplement selon l'une des revendications précédentes, caractérisé en ce qu'il comporte plusieurs lumières (9) d'introduction du pion (25) d'axe de clip, conjuguées avec des systèmes d'encoches (11) décalés en hauteur.

7. Dispositif d'accouplement selon l'une des revendications précédentes, caractérisé en ce que la tige d'agitateur (3) présente à sa partie supérieure plusieurs trous de perçage (15) décalés en hauteur.

## Claims

1. Adjustable device coupling the drive (5) and the stirring shaft rod (3), for each of the stirring devices on paint stirring machines, characterised by the fact that it causes operation of a drive (5) of which the part coupling with the stirring shaft rod (3) is in the form of a sleeve (7) which receives the said stirring shaft rod in its bore with low play, the said sleeve having at least one lengthwise port (9) formed on its wall and external side notches (11) spaced lengthwise, the stirrer rod (3) received in the sleeve (7) which has at its upper end at least one transversal drilled hole (15) and an element in clip form (17) having two flexible claws (21) connected to a base part (19) and orientated towards each other so as to flexibly embrace said drive sleeve, each of the said claws also having an internal rise (23) complementary respectively to each of the said notches (11), the base part (19) being provided with a pin or shaft element (25) extending towards the opening in the clip element and engaging in the said drilled hole in the stirrer shaft, the said clip element being made to engage on the sleeve on the port side (9) by a simple manual push so as to lock the connection between drive and shaft rod, the said pin element (25) engaging in the port and the hole on the stirrer rod, while the claws of the clip simultaneously grip the sleeve casing at an appropriate height for coupling, their internal rises engaging in the sleeve notches, and for disengagement by reverse traction to free the coupling connection.

2. Coupling device according to Claim 1, characterised by the fact that the drive (5) has several sets of notches (11) opposite each other two by two on the sleeve casing.

3. Coupling device according to either of Claims 1 and 2, characterised by the fact that the clip element (17) is symmetrical in relation to a median plan of the base part (19).

4. Coupling device according to one of the preceding claims, characterised by the fact that the said notches opposite each other (11) are arranged parallel to the median plan (P) of the drive, in a zone of grip by the clip claws on the drive casing.

5. Coupling device according to any one of the preceding claims, characterised by the fact that the notches (11) are variable in conformation.

6. Coupling device according to any one of the preceding claims, characterised by having several ports (9) for insertion of the clip shaft pin (25), the said ports being linked by systems of notches (11) staggered in height.

7. Coupling device according to any one of the preceding claims, characterised by the fact that the stirrer rod (3) in its upper part has a number of drill holes (15) staggered in height.

## Patentansprüche

1. Einstellbare Kupplungsvorrichtung für den Mitnehmer (5) und den Schaft (3) einer Rührerwelle, die für beliebige Rührer von Farbrührern ausgelegt ist, dadurch **gekennzeichnet,** daß der Kupplungsteil des Mitnehmers (5) für den Schaft (3) der Rührerwelle in Form einer Muffe (7) ausgebildet ist, deren Bohrung mit geringem Spiel den Schaft (3) der Rührerwelle aufnimmt, die Muffe mit mindestens einem Längsschlitz (9), der in ihrer Wand ausgebildet ist, und mit äußeren Seitenkerben (11) versehen ist, die in Längsrichtung einen Abstand von einander aufweisen, der in der Muffe (7) aufgenommene Schaft (3) der Rührerwelle an seinem oberen Ende mindestens eine querverlaufende Durchgangsbohrung (15) aufweist, ein Element in Form eines Klipses (17) vorgesehen ist, der zwei elastische Arme (21) aufweist, die an einem Basisteil (19) mit einander verbunden und auf anderer zu gerichtet sind, um die Muffe des Mitnehmers elastisch zu umgreifen, jeder der Arme außerdem mit einem nach innen weisenden Vorsprung (23) versehen ist, der jeweils zu jeder der Kerben (11) komplementär ist, und der Basisteil (19) mit einem Ansatz (25) in Form eines Zapfens oder einer Achse versehen ist, der sich in Richtung der Öffnung des Klipses und zum Eingriff in die Durchgangsbohrung des Schaftes der Rührerwelle erstreckt, wobei der Klips auf der Seite des Schlitzes (9) durch ein einfaches Aufschieben von Hand derart einrastbar ist, daß die Verbindung zwischen dem Mitnehmer und dem Schaft der Rührerwelle verriegelt ist, wobei der Ansatz (25) mit dem Schlitz und der Durchgangsbohrung des Schaftes der Rührerwelle in Eingriff kommt, während gleichzeitig die Arme des Klipses den Muffenkörper auf einer geeigneten Höhe der Kupplung festklemmen und ihre Vorsprünge in die Kerben der Muffe greifen, und durch entgegengerichtetes Ziehen zum Lösen der Kupplungsverbindung ausrückbar ist.

2. Kupplungsvorrichtung nach Anspruch 1, dadurch gekennzeichnet, daß der Mitnehmer (5) mehrere Reihen von Seitenkerben (11) aufweist, von denen jeweils zwei auf dem Muffenkörper einander gegenüberliegen.

3. Kupplungsvorrichtung nach einem der Ansprüche 1 und 2, dadurch gekennzeichnet, daß der Klips (17) zur Mittelebene des Basisteils (19) symmetrisch ausgebildet ist.

4. Kupplungsvorrichtung nach einem der vorhergehenden Ansprüche, dadurch gekennzeichnet, daß die sich gegenüberliegenden Kerben (11) im Klemmbereich der Arme des Klipses auf dem Körper des Mitnehmers parallel zur Mittelebene (P) des Mitnehmers angeordnet sind.

5. Kupplungsvorrichtung nach einem der vorhergehenden Ansprüche, dadurch gekennzeichnet, daß die Kerben (11) eine unterschiedliche Ausgestaltung aufweisen.

6. Kupplungsvorrichtung nach einem der vorhergehenden Ansprüche, dadurch gekennzeichnet, daß sie mehrere Schlitze (9) zur Aufnahme des Ansatzes (25) des Klipses aufweist, die mehreren in der Höhe versetzten Anordnungen von Kerben (11) zugeordnet sind.

7. Kupplungsvorrichtung nach einem der vorhergehenden Ansprüche, dadurch gekennzeichnet, daß der Schaft (3) der Rührerwelle in seinem oberen Teil mehrere in der Höhe versetzte Durchgangsbohrungen (15) aufweist.
